# EUROPÄISCHE PATENTSCHRIFT

(11) **EP 2 565 599 B1**
(45) Veröffentlichungstag und Bekanntmachung des Hinweises auf die Patenterteilung: **25.06.2014**
(21) Anmeldenummer: 12181238.2
(22) Anmeldetag: 21.08.2012
(51) Int. Cl.: G01G 23/00

(54) **Waage mit einer Solarstromversorgung**
Scale with solar power supply
Balance avec une source d'alimentation solaire

(30) Priorität: 31.08.2011 DE 102011053137
(43) Veröffentlichungstag der Anmeldung: 06.03.2013
(73) Patentinhaber: Leifheit AG, 56377 Nassau (DE)
(72) Erfinder: Denk, Andre, 45481 Mülheim a.d. Ruhr (DE); Emter, Artjom, 56077 Koblenz (DE); Moddick, Christian, 48317 Drensteinfurt (DE)
(74) Vertreter: Bungartz, Klaus Peter

(56) Entgegenhaltungen:
- DE-U1- 8 813 698
- DE-U1- 29 924 679

## Beschreibung

Die Erfindung betrifft eine Waage mit einer Solarstromversorgung in Form zumindest einer Solarzelle, einer Elektronik zum Bestimmen des über Wägezellen ermittelten Gewichts eines auf einer Wägeplatte der Waage befindlichen Wiegeguts und mit wenigstens einem Zwischenspeicher für den von der Solarstromversorgung erzeugten Strom, wobei der Strom zur Speisung der Elektronik dieser über die Solarstromversorgung oder den Zwischenspeicher zugeführt ist.

### Stand der Technik

Waagen mit Solarstromversorgung sind allgemein bekannt. Die bekannten Waagen weisen einen Energiespeicher auf, der als Akkumulator ausgebildet ist. Dieser Akkumulator speichert die von der Solarstromversorgung gelieferte elektrische Energie und gibt sie an die Elektronik ab, damit diese den eigentlichen Wägevorgang durchführen kann. Im einfachsten Fall wird der Energiespeicher von der Solarstromversorgung unabhängig von der Aktivität der Elektronik geladen. Dies setzt voraus, dass der Energiespeicher unabhängig vom Ladevorgang immer genug Energie bereitstellen kann, die von der Elektronik zur Durchführung des Wägevorgangs abgerufen werden kann.

Die DE 299 24 679 U1 1 beschreibt beispielsweise eine aufklappbare Diätwaage mit Solarzellen auf einem Deckel. Die Waage wird in einer Ausgestaltung mittels eines Akkumulators betrieben. Der Akkumulator wird wiederum von den Solarzellen geladen.

Der Nachteil der bekannten Waagen besteht darin, dass ein aufwändiger Akkumulator vorgesehen werden muss, der die Herstellungskosten erhöht. Darüber hinaus benötigt dieser Akkumulator einen vergleichsweise großen Bauraum, so dass die Gestaltungsfreiheit der Waage eingeschränkt ist. Dies betrifft insbesondere kleinere Wagen, wie beispielsweise Küchenwaagen oder Briefwaagen. Auch elegante Waagen, zum Beispiel Personenwagen mit gläserner Wägeplatte, sind aufgrund des großen Akkumulators in der Gestaltungsfreiheit eingeschränkt.

Zur Lösung dieses Problems weist eine andere Waage eine Elektronik auf, die dafür Sorge trägt, dass die Solarstromversorgung die Elektronik unabhängig vom Zwischenspeicher mit Energie versorgt, solange die Solarstromversorgung genügend Spannung bereitstellen kann.

Falls jedoch der Lichteinfall so gering ist, dass die Spannung der Solarstromversorgung nicht mehr ausreichend ist, wird der Zwischenspeicher zugeschaltet. Diese Waage weist also eine Eingangs-/Ausgangsschaltung (I/O-Schaltung) der Elektronik auf, die den von der Solarstromversorgung gelieferten Strom überwacht und dann, wenn dieser zu gering wird, den Zwischenspeicher zuschaltet.

Ferner ist bei dieser Waage der Zwischenspeicher zum Aufladen mit der Solarstromversorgung verbunden. Damit der Zwischenspeicher die zum eigentlichen Wiegen notwendige Energie nicht zum Aufladen des Zwischenspeichers verwendet, wenn dies dazu führen würde, dass dann die notwendige Energie über die Solarstromversorgung nicht mehr zur Verfügung gestellt werden kann, ist der Zwischenspeicher nur dann mit der Solarstromversorgung verbunden, wenn die Solarstromversorgung gleichzeitig genügend Energie zur Verfügung stellt, um die Elektronik zur Durchführung des Wiegeprozesses zu versorgen.

Auch hierzu wird die Eingangs-/Ausgangsschaltung verwendet, die die von der Solarstromversorgung zur Elektronik gelieferten Stromstärke oder die Spannung zwischen der Solarstromversorgung und der Elektronik bestimmt und bei Abfall des gemessenen Wertes den Zwischenspeicher abschaltet, so dass dieser keinen Strom mehr von der Solarstromversorgung erhält.

Diese bekannten Waagen haben den Nachteil, dass mit der Eingangs-/Ausgangsschaltung ein elektronisches Bauteil notwendig ist, das ebenfalls die Kosten der Wagen erhöht. Zur Zu- oder Abschaltung des Zwischenspeichers ist üblicherweise ein Mikrocontroller notwendig, der die Eingangs-/Ausgangsschaltung abfragt und entsprechende Schaltung vornimmt. Durch diesen Mikrocontroller und die weitere Peripherie entsteht wiederum ein zusätzlicher Stromverbrauch.

### Kurzbeschreibung der Erfindung

Aufgabe der Erfindung ist es daher, eine Waage mit Solarstromversorgung zu schaffen, die möglichst wenige Komponenten erfordert und gleichzeitig eine zusätzliche Stromversorgung über einen Pufferspeicher bietet.

Diese Aufgabe wird nach der Erfindung dadurch gelöst, dass der Zwischenspeicher über die Elektronik elektronisch zuschaltbar ist, wobei die Elektronik derart ausgebildet ist, dass während eines Wiegebetriebs der Waage der Zwischenspeicher von der Solarstromversorgung getrennt und während eines Bereitschaftsmodus der Zwischenspeicher mit der Solarstromversorgung zur Ladung des Zwischenspeichers verbunden ist.

Die erfindungsgemäße Waage weist den besonderen Vorteil auf, dass auf eine Messung der Stromstärke oder Spannung zwischen der Solarstromversorgung und der Elektronik verzichtet werden kann. Gleichzeitig weist die Waage einen Zwischenspeicher auf, ohne dass die Gefahr besteht, dass ein Aufladen des teilweise oder vollständig entladenen Zwischenspeichers die Energieversorgung der Elektronik so stark herabsetzt, dass eine Funktion der Waage beeinträchtigt wird. Erfindungsgemäß wird also vermieden, dass zu viel Strom zum Zwischenspeicher fließt, so dass die Solarstromversorgung nicht mehr in der Lage ist, die Elektronik zu versorgen ohne ihrerseits wiederum vom Zwischenspeicher unterstützt zu werden.

### Beschreibung der Ausführungsarten

Die Erfindung ist insbesondere in Verbindung mit Waagen von Vorteil, die einen möglichst kleinen und leichten Zwischenspeicher aufweisen, der darüber hinaus üblicherweise auch kostengünstig sein soll. Dies sind z. B. Küchenwaagen oder auch Briefwaagen. Die Erfindung kann aber auch in Verbindung mit allen anderen Waagen, beispielsweise Personenwaagen eingesetzt werden.

Als Zwischenspeicher wird kein aufwendiger Akkumulator verwendet sondern ein möglichst günstiger Speicher, dies kann ein kapazitiver Speicher oder auch ein klassischer, dann aber kleiner Akkumulator sein. Insbesondere in Verbindung mit dem kapazitiven Speicher ist die Erfindung besonders günstig umsetzbar.

Insbesondere in Verbindung mit einem kapazitiven Speicher und dem Wunsch, eine möglichst lange Zeitdauer zur Verfügung zu haben, während der die Waage benutzbar ist, sollte die Waage einen möglichst geringen Energieverbrauch aufweisen. Hierzu werden bevorzugt Wägezellen verwendet, die einen möglichst geringen Stromverbrauch besitzen. Dies sind zum Beispiel Wägezellen, die auf kapazitiver Basis beruhen. Aber auch die klassischen Wägezellen mit darin enthaltenen Dehnungsmessstreifen bzw. einem vergleichbaren Messprinzip sind in Verbindung mit der Erfindung anwendbar, zumal auch diese Wägezellen in jüngerer Zeit mit zunehmend geringer werden Stromflüssen arbeiten.

Als Zwischenspeicher kommt bevorzugt ein kapazitiver Speicher zum Einsatz. Dies kann zum Beispiel ein Doppelschichtkondensator oder ein sonstiger Elektrolytkondensator sein. Doppelschichtkondensatoren werden zum Beispiel unter dem Markennamen "Gold-Cap" von der Firma Panasonic vertrieben. Diese haben den Vorteil, dass keine Tiefentladung möglich ist, was insbesondere dann interessant ist, wenn die Waage längere Zeit nicht benötigt wird. Bleibt beispielsweise die Waage über mehrere Monate in einem Küchenschrank und wird nicht mit Energie versorgt, wird dadurch die Lebensdauer des Doppelschichtkondensators nicht beeinträchtigt.

In Verbindung mit Doppelschichtkondensatoren ist es besonders effektiv, wenn der Zwischenspeicher der Waage im Bereitschaftsmodus, also im Stand-by-Modus geladen wird, während er im Funktionsmodus nicht geladen wird und die über die Solarstromversorgung gewonnene Energie unmittelbar zur Versorgung der Elektronik genutzt wird.

Üblicherweise werden die Waagen zunächst, nach Einschalten oder Entnahme aus einem Schrank zum unmittelbaren Wiegen genutzt. Das heißt, sie werden dann vom Benutzer sofort in den Funktionsmodus versetzt. Dann wird die Waage wieder abgeschaltet oder stehen gelassen, d.h. die Waage wird aktiv oder über einen integrierten Zeitschalter nach einer vordefinierten Zeitdauer in den Stand-By-Modus versetzt. Jetzt können die Solarzellen weiterhin Strom liefern, den die Solarstromversorgung dann aber nicht mehr an die Elektronik sondern an den Doppelschichtkondensator weitergibt. Dieser wird dann vollständig aufgeladen, so dass der Strom dann später wieder für eine Funktion außerhalb der Stromversorgung über die Solarstromversorgung genutzt werden kann.

Besonders vorteilhaft ist in diesem Fall eine Schaltung, die während des Stand-By-Modus anzeigt, ob der Zwischenspeicher noch geladen wird. Dies kann dem Benutzer z.B. signalisieren, wann er die Waage wieder in den Schrank stellen kann. So kann über eine Ladedauer von 10 Minuten oder bis auch zu einer Stunde sichergestellt werden, dass der Doppelschichtkondensator nicht nur teilgeladen, sondern vollständig aufgeladen wird.

In dem Ladepfad, der die Solarstromversorgung mit den Zwischenspeicher verbindet, ist bevorzugt eine Ladestrombegrenzung vorgesehen. Diese ist insbesondere in Verbindung mit der Verwendung von Doppelschichtkondensatoren zweckmäßig, da diese Doppelschichtkondensatoren keine besonders hohe Spannungsfestigkeit aufweisen.

Die erfindungswesentlichen Vorteile liegen zusammenfassend darin, dass nunmehr keine Messung der Stromstärke oder der Spannung zwischen der Solarstromversorgung und der Elektronik mehr erforderlich ist. Während bei den bekannten Waagen das Laden des Zwischenspeichers über diese Messung der Stromstärke oder Spannung unterbrochen wird um zu verhindern, dass das Laden der Elektronik wiederum die notwendige Leistung entzieht, Erfolg erfindungsgemäß das Laden nunmehr nur noch während des Bereitschaftsmodus.

Ist die Waage dagegen in den Funktionsmodus umgeschaltet, wird der Zwischenspeicher elektronisch von der Solarstromversorgung abgekoppelt, so dass prinzipbedingt verhindert ist, dass die von der Solarstromversorgung erzeugte Energie vom Zwischenspeicher aufgenommen wird.

Wenn in diesem Zusammenhang von Zwischenspeicher gesprochen wird, ist hierunter die elektrische Funktion einer Energiespeicherung zu verstehen, die von einem gemeinsamen Zwischenspeicher oder auch mehreren einzelnen, parallelgeschalteten Zwischenspeichern übernommen werden kann. Erfindungsgemäß ist dabei bei einer bevorzugten Ausgestaltung kein weiterer Stromspeicher mehr vorgesehen, d.h. es ist weder eine Batterie noch ein Akkumulator vorhanden. Die Waage wird also ausschließlich über die Solarstromversorgung und in den Zeitspannen, in denen keine ausreichend große Strahlungsenergie zur Verfügung steht, über den Zwischenspeicher mit Energie versorgt.

Das Einschalten der Waage kann auf vielfältige Weise realisiert werden. So ist es zum Beispiel möglich, dass an der Waage ein kapazitiver Näherungsschalter vorgesehen ist, über den die Waage eingeschaltet werden kann. Einschalten meint in diesem Zusammenhang insbesondere das Umschalten von dem Bereitschaftsmodus in den Funktionsmodus.

## Patentansprüche

1. Waage mit einer Solarstromversorgung in Form zumindest einer Solarzelle, einer Elektronik zum Bestimmen des über Wägezellen ermittelten Gewichts eines auf einer Wägeplatte der Waage befindlichen Wiegeguts und mit wenigstens einem Zwischenspeicher für den von der Solarstromversorgung erzeugten Strom, wobei der Strom zur Speisung der Elektronik dieser über die Solarstromversorgung oder den Zwischenspeicher zugeführt ist, wobei der Zwischenspeicher über die Elektronik elektronisch zuschaltbar ist, wobei die Elektronik derart ausgebildet ist, dass während eines Bereitschaftsmodus der Zwischenspeicher mit der Solarstromversorgung zur Ladung des Zwischenspeichers verbunden ist, **dadurch gekennzeichnet, dass** während eines Wiegebetriebs der Waage der Zwischenspeicher von der Solarstromversorgung getrennt ist.

2. Waage mit Solarstromversorgung und zuschaltbarem Zwischenspeicher nach Anspruch 1, **dadurch gekennzeichnet, dass** der Zwischenspeicher ein kapazitiver Speicher ist.

3. Waage mit Solarstromversorgung und zuschaltbarem Zwischenspeicher nach Anspruch 2, **dadurch gekennzeichnet, dass** der Zwischenspeicher ein Elektrolythkondensator, insbesondere in Form eines Doppelschicht-Kondensators ist.

4. Waage mit Solarstromversorgung und zuschaltbarem Zwischenspeicher nach Anspruch 1, **dadurch gekennzeichnet, dass** der Zwischenspeicher ein Akkumulator ist.

5. Waage mit Solarstromversorgung und zuschaltbarem Zwischenspeicher nach einem der beiden vorhergehenden Ansprüche, **dadurch gekennzeichnet, dass** die Wägezellen kapazitive Wägezellen sind.

6. Waage mit Solarstromversorgung und zuschaltbarem Zwischenspeicher nach einem der Ansprüche 1 bis 4, **dadurch gekennzeichnet, dass** die Wägezellen solche Wägezellen sind, die auf dem Prinzip der Dehnungsmessung (DMS) beruhen.

7. Waage mit Solarstromversorgung und zuschaltbarem Zwischenspeicher nach einem der vorhergehenden Ansprüche, **dadurch gekennzeichnet, dass** in dem Ladepfad, der die Solarstromversorgung mit dem Zwischenspeicher verbindet, eine Ladestrombegrenzung vorgesehen ist.

8. Waage mit Solarstromversorgung und zuschaltbarem Zwischenspeicher nach einem der vorhergehenden Ansprüche, **dadurch gekennzeichnet, dass** die Zuschaltung des Zwischenspeichers unabhängig von der Stromstärke oder Spannung der Solarstromversorgung erfolgt.

9. Waage mit Solarstromversorgung und zuschaltbarem Zwischenspeicher nach einem der vorhergehenden Ansprüche, **dadurch gekennzeichnet, dass** sie über den Zwischenspeicher hinaus keinen weiteren Stromspeicher aufweist.

## Claims

1. Scales with a solar power supply in the form of at least one solar cell, electronics for determining the weight ascertained via weighing cells of an item lying on the weighing platform of the scales and with at least one temporary storage for the current generated by the solar power supply, wherein the current for feeding the electronics is fed to the same via the solar power supply or the temporary storage, wherein the temporary storage can be electronically connected via the electronics, wherein the electronics are designed such that during a standby mode the temporary storage is connected with the solar power supply for charging the temporary storage, **characterised in that** during a weighing operation of the scales the temporary storage is disconnected from the solar power supply.

2. The scales with a solar power supply and connectable temporary storage according to claim 1, **characterised in that** the temporary storage is a capacitive storage.

3. The scales with a solar power supply and connectable temporary storage according to claim 2, **characterised in that** the temporary storage is an electrolytic capacitor, in particular in the form of a double-layer capacitor.

4. The scales with a solar power supply and connectable temporary storage according to claim 1, **characterised in that** the temporary storage is a battery.

5. The scales with a solar power supply and connectable temporary storage according to one of two preceding claims, **characterised in that** the weighing cells are capacitive weighing cells.

6. The scales with a solar power supply and connectable temporary storage according to one of claims 1 to 4, **characterised in that** the weighing cells are cells based on the principle of strain measurement (DMS).

7. The scales with a solar power supply and connectable temporary storage according to one of the preceding claims, **characterised in that** a charging current limit is provided in the charging path connecting the solar power supply with the temporary storage.

8. The scales with a solar power supply and connectable temporary storage according to one of the preceding claims, **characterised in that** connecting the temporary storage is effected independently of the amperage or the voltage of the solar power supply.

9. The scales with a solar power supply and connectable temporary storage according to one of the preceding claims, **characterised in that** it comprises no current storage other than the temporary storage.

## Revendications

1. Balance avec une alimentation électrique solaire sous la forme d'au moins une cellule solaire, une électronique pour déterminer le poids, évalué par le biais de cellules de pesée, d'un produit de pesée se trouvant sur un plateau de pesée de la balance et avec au moins un dispositif de stockage intermédiaire pour le courant généré par l'alimentation électrique solaire, moyennant quoi le courant, pour alimenter l'électronique, est amené vers celle-ci via l'alimentation électrique solaire ou le dispositif de stockage intermédiaire, moyennant quoi le dispositif de stockage intermédiaire peut être mis en circuit électroniquement par le biais de l'électronique, l'électronique étant réalisée de manière à ce que, pendant un mode de veille, le dispositif de stockage intermédiaire est en liaison avec l'alimentation électrique solaire pour charger le dispositif de stockage intermédiaire, **caractérisée en ce que**, pendant un mode de pesée de la balance, le dispositif de stockage intermédiaire est coupé de l'alimentation électrique solaire.

2. Balance avec une alimentation électrique solaire et un dispositif de stockage intermédiaire pouvant être mis en circuit selon la revendication 1, **caractérisée en ce que** le dispositif de stockage intermédiaire est un accumulateur capacitif.

3. Balance avec une alimentation électrique solaire et un dispositif de stockage intermédiaire pouvant être mis en circuit selon la revendication 2, **caractérisée en ce que** le dispositif de stockage intermédiaire est un condensateur électrolytique, en particulier sous la forme d'un condensateur à double couche.

4. Balance avec une alimentation électrique solaire et un dispositif de stockage intermédiaire pouvant être mis en circuit selon la revendication 1, **caractérisée en ce que** le dispositif de stockage intermédiaire est un accumulateur.

5. Balance avec une alimentation électrique solaire et un dispositif de stockage intermédiaire pouvant être mis en circuit selon l'une des deux revendications précédentes, **caractérisée en ce que** les cellules de pesée sont des cellules de pesée capacitives.

6. Balance avec une alimentation électrique solaire et un dispositif de stockage intermédiaire pouvant être mis en circuit selon l'une des revendications 1 à 4, **caractérisée en ce que** les cellules de pesée sont des cellules de pesée de type reposant sur le principe de la mesure de l'allongement (DMS).

7. Balance avec une alimentation électrique solaire et un dispositif de stockage intermédiaire pouvant être mis en circuit selon l'une des revendications précédentes, **caractérisée en ce que**, dans le trajet de charge qui relie l'alimentation électrique solaire au dispositif de stockage intermédiaire, on prévoit une limitation du courant de charge.

8. Balance avec une alimentation électrique solaire et un dispositif de stockage intermédiaire pouvant être mis en circuit selon l'une des revendications précédentes, **caractérisée en ce que** la mise en circuit du dispositif de stockage intermédiaire s'effectue de manière indépendante de la puissance du courant ou de la tension de l'alimentation électrique solaire.

9. Balance avec une alimentation électrique solaire et un dispositif de stockage intermédiaire pouvant être mis en circuit selon l'une des revendications précédentes, **caractérisée en ce que**, mis à part le dispositif de stockage intermédiaire, elle ne présente pas d'autre accumulateur de courant.
